# FASCICULE DE BREVET EUROPEEN

(11) **EP 2 809 416 B1**
(45) Date de publication et mention de la délivrance du brevet: **28.08.2019**
(21) Numéro de dépôt: 13702469.1
(22) Date de dépôt: 01.02.2013
(51) Int. Cl.: B01D 17/02, B01D 19/00

(54) **DISPOSITIF DE SÉPARATION DE DEUX FLUIDES NON MISCIBLES DE DENSITÉS DIFFERENTES PAR CENTRIFUGATION**
VORRICHTUNG ZUM TRENNEN ZWEIER NICHTMISCHBARER FLÜSSIGKEITEN UNTERSCHIEDLICHER DICHTE DURCH ZENTRIFUGIERUNG
DEVICE FOR SEPARATING TWO IMMISCIBLE FLUIDS OF DIFFERENT DENSITIES BY CENTRIFUGATION

(30) Priorité: 02.02.2012 FR 1250983
(43) Date de publication de la demande: 10.12.2014
(73) Titulaire: Ylec Consultants, 38700 La Tronche (FR)
(72) Inventeur: LECOFFRE, Yves, 38000 Grenoble (FR); MAJ, Guillaume, 38400 Saint Martin d'Hères (FR)
(74) Mandataire: Casalonga
(86) Numéro de dépôt international: PCT/EP2013/052089
(87) Numéro de publication internationale: WO 2013/113903

(56) Documents cités:
- WO-A1-93/25294
- WO-A2-2012/009158
- WO-A2-2012/009159
- US-A- 3 810 347

## Description

La présente invention concerne le domaine de la séparation de fluides non miscibles de densités différentes.

Elle peut s'appliquer en particulier aux problèmes de la séparation de l'huile et de l'eau dans les émulsions pétrolières, que ce soit dans le domaine de la production pétrolière, du raffinage ou de la dépollution. Elle peut s'appliquer également à la séparation des graisses dans le domaine de l'habitat, à l'extraction de gaz libres dans un ou des liquides, au traitement des eaux de pluie ou à la production d'huile d'olive. En particulier, elle peut s'appliquer à la séparation des phases d'une émulsion qui est constituée d'un fluide majoritaire, dit fluide porteur, dans lequel sont présentes des gouttes d'un fluide secondaire.

Pour réaliser cette opération, il est connu d'utiliser des séparateurs gravitaires dans lesquels on introduit l'émulsion à une extrémité d'un réservoir de telle sorte qu'après un temps de séjour suffisant, les gouttes du fluide secondaire de l'émulsion montent ou descendent selon que leur densité est inférieure ou supérieure à celle du fluide porteur. On crée ainsi en extrémité du réservoir deux couches superposées des deux fluides, le plus léger au-dessus et le plus lourd au-dessous, qui sont pompés par des moyens appropriés.

Les séparateurs gravitaires ont le défaut majeur de nécessiter des durées de séparation très importantes. Il a été évalué qu'il faut par exemple une durée de 5 minutes pour qu'une goutte d'huile de diamètre égal à 200 micromètres, de densité 0,85, s'élève d'une hauteur de 1 m dans de l'eau douce et calme à 20°C. De plus, les séparateurs gravitaires sont encombrants, lourds et chers. Ils ne peuvent donc pas être déplacés ou embarqués sur des plateformes légères et rapides, telles les hovercrafts dont l'usage est particulièrement adapté au traitement des marées noires dans des zones d'accès difficiles telles que des marécages.

Il est également connu d'utiliser des séparateurs tournants à effet centrifuge, qui permettent des durées de séparation beaucoup plus courtes que les séparateurs gravitaires, tels que des cyclones fixes, des cyclones tournants et des centrifugeuses. Dans les modes de réalisation actuels, ces séparateurs tournants sont généralement complexes et sont également très lourds, encombrants et très onéreux. Ils ne sont donc pas non plus adaptés pour être déplacés ou embarqués.

Un séparateur à effet centrifuge est en particulier décrit dans le brevet publié sous le N° WO95/26223. Ce séparateur comprend un tambour rotatif délimitant un compartiment présentant une entrée axiale d'une émulsion à une extrémité et dans lequel sont aménagés, sur une première longueur, des palettes longitudinales s'étendant radialement, puis, sur une seconde longueur, un corps cylindrique poreux de coalescence formé par des spires de mailles enroulées ou des couches de mailles. Ce tambour comprend, en aval de ce compartiment, des déversoirs annulaires en vue d'une extraction des liquides, séparément, et des passages axiaux en vue de l'évacuation des liquides séparés. Ce séparateur présente notamment les inconvénients d'être très limité en ce qui concerne les rapports entre les densités des liquides de l'émulsion à traiter et les rapports volumétriques des liquides dans l'émulsion à traiter et de s'encrasser rapidement.

Un autre séparateur à effet centrifuge est également décrit dans le brevet publié sous le N° 93/25294. Ce séparateur comprend un tambour rotatif de forme tronconique délimitant un compartiment présentant une entrée axiale d'une émulsion à son extrémité la plus petite et comprend, en aval de ce compartiment, des déversoirs annulaires en vue d'une extraction des liquides, séparément, et des passages axiaux en vue de l'évacuation des liquides séparés. Dans une première partie dudit compartiment, très éloignée de son extrémité aval, sont aménagées des palettes longitudinales s'étendant radialement, dont l'objet annoncé est de permettre un alignement axial de l'émulsion. Or, ces ailettes présentent l'inconvénient d'engendrer un cisaillement important lors de la rotation du tambour et un battage circonférentiel de l'émulsion, contraire au but recherché de séparation des liquides.

La présente invention a pour but d'améliorer les séparateurs à effet centrifuge.

Il est proposé un dispositif de séparation de fluides non miscibles de densités différentes d'une émulsion contenant au moins un liquide, qui comprend un tambour rotatif longitudinal présentant un axe longitudinal de rotation.

Le tambour comprend intérieurement, longitudinalement d'amont en aval et entre au moins une entrée amont et des sorties aval un étage de mise en rotation solide, un étage de migration et de coalescence et un étage d'extraction.

L'étage de mise en rotation solide comprend au moins une chambre dans laquelle est aménagée au moins une cloison intérieure longitudinale d'entraînement circonférentiel en rotation solide délimitant au moins un espace d'écoulement communiquant avec ladite entrée.

L'étage de migration et de coalescence comprend au moins une chambre dans laquelle est aménagé au moins un cloisonnement intérieur longitudinal d'entraînement circonférentiel en rotation solide, délimitant une pluralité de canaux longitudinaux d'écoulement présentant respectivement une extrémité amont communiquant avec ledit espace d'écoulement dudit étage de mise en rotation solide et une extrémité aval reliée auxdites sorties, ledit cloisonnement comprenant au moins une cloison longitudinale délimitant au moins l'un desdits canaux longitudinaux et s'étendant jusqu'à ladite extrémité aval.

L'étage d'extraction comprend au moins un déversoir de liquide comprenant un seuil de déversement tourné du côté dudit axe de rotation et s'étendant le long d'un espace d'écoulement longitudinal communiquant, en amont, avec lesdits canaux longitudinaux de l'étage de migration et de coalescence par au moins un passage longitudinal et comprenant, en aval, un espace aval d'évacuation de liquide communiquant avec l'espace d'écoulement longitudinal et relié à l'une desdites sorties aval.

L'entrée amont - débouche- dans une partie dudit espace d'écoulement de l'étage de mise en rotation solide, située proche de l'axe de rotation.

Le tambour est équipé d'une paroi intérieure radiale séparant la chambre de l'étage de mise en rotation solide et la chambre de l'étage de migration et de coalescence, cette paroi intérieure radiale étant munie de passages traversants.

Le dispositif peut comprendre un conduit axial ou un tube axial solidaire du tambour pour l'amenée de l'émulsion dans la partie centrale de la chambre de l'étage de mise en rotation solide.

Le cloisonnement de l'étage de migration et de coalescence peut définir, d'amont en aval, une pluralité de canaux longitudinaux répartis circonférentiellement.

Le cloisonnement de l'étage de migration et de coalescence peut définir, d'amont en aval, une pluralité intermédiaire de canaux longitudinaux répartis circonférentiellement et radialement, suivie d'une pluralité aval de canaux longitudinaux répartis circonférentiellement dont chaque canal communique avec plusieurs des canaux de la première pluralité de canaux.

Le cloisonnement de l'étage de migration et de coalescence peut définir, d'amont en aval, une pluralité amont de canaux longitudinaux répartis circonférentiellement, suivie d'une pluralité intermédiaire de canaux longitudinaux répartis circonférentiellement et radialement dont plusieurs canaux communiquent avec chaque canal de la pluralité amont de canaux, suivie d'une pluralité aval de canaux longitudinaux répartis circonférentiellement dont chaque canal communique avec plusieurs des canaux de la première pluralité de canaux.

L'étage d'extraction peut comprendre un déversoir dont le seuil de déversement est annulaire et un espace aval d'évacuation annulaire communiquant avec une sortie aval périphérique.

L'étage d'extraction peut comprendre un déversoir dont le seuil de déversement est proche de l'axe de rotation, l'espace aval d'évacuation de ce déversoir étant relié à une sortie aval de liquide et à une sortie aval de gaz.

Le dispositif peut comprendre des cloisons d'entraînement circonférentiel placées dans l'espace aval d'écoulement.

Des ailettes d'entraînement circonférentiel peuvent être placées dans l'espace d'écoulement longitudinal.

L'étage d'extraction peut comprendre un déversoir intérieur de liquide plus léger dont l'espace d'écoulement longitudinal communique avec l'étage de migration et de coalescence par un passage longitudinal intérieur et un déversoir extérieur d'un liquide plus lourd dont l'espace d'écoulement longitudinal communique avec l'étage de migration et de coalescence par un passage longitudinal extérieur plus éloigné dudit axe de rotation que le passage longitudinal intérieur.

Le seuil de déversement du déversoir extérieur peut être plus éloigné dudit axe de rotation que le seuil de déversement du déversoir intérieur.

Le seuil de déversement du déversoir extérieur peut être situé, dans le sens radial, entre le passage longitudinal extérieur et le seuil de déversement du déversoir intérieur.

Le déversoir intérieur et le déversoir extérieur peuvent être reliés à des sorties aval différentes par l'intermédiaire d'espaces aval d'évacuation différents.

Des ailettes d'entraînement circonférentiel peuvent être placées dans l'espace intermédiaire d'écoulement reliant le passage extérieur et le déversoir extérieur.

Lesdites ailettes d'entraînement circonférentiel peuvent présenter un bord intérieur situé à l'extérieur et à distance du seuil de déversement du déversoir extérieur.

Des ailettes d'entraînement circonférentiel peuvent être placées dans l'espace d'écoulement longitudinal du déversoir intérieur.

Des ailettes d'entraînement circonférentiel peuvent être placées dans l'espace aval d'évacuation du déversoir intérieur.

Des ailettes d'entraînement circonférentiel peuvent être placées dans l'espace aval d'évacuation du déversoir extérieur.

Le dispositif peut comprendre un support dudit tambour, présentant une partie munie de conduits de sortie, au moins l'un de ces conduits de sortie communiquant avec une sortie aval de liquide dudit tambour.

Le dispositif peut comprendre un joint tournant de fluide formé entre le tambour et le support, du côté de l'étage d'extraction, ce joint tournant comprenant deux parois radiales fixes solidaires du support et délimitant un espace ouvert radialement vers l'intérieur et une paroi radiale tournante solidaire du tambour engagée à distance entre lesdites bagues radiales fixes, cet espace ouvert étant relié à la chambre de l'étage de migration et de coalescence, la paroi radiale tournante étant munie de part et d'autre d'ailettes d'entraînement circonférentiel.

Le tambour peut être équipé d'une paroi intérieure radiale séparant la chambre de l'étage de migration et de coalescence et l'étage d'extraction, cette paroi intérieure radiale présentant au moins un passage longitudinal de communication entre ces étages.

Le dispositif peut comprendre un conduit reliant l'espace interne du déversoir intérieur et l'espace interne du déversoir extérieur.

Le dispositif peut comprendre un conduit pour relier l'espace interne du déversoir intérieur à l'extérieur et un conduit pour relier l'espace interne du déversoir extérieur à l'extérieur.

Le dispositif peut comprendre des sources de pression/dépression de gaz qui sont reliées aux espaces d'écoulement des déversoirs de l'étage d'extraction, de façon que ces pressions agissent respectivement sur les surfaces libres des liquides.

L'étage d'extraction peut être situé au-dessus de l'étage de migration et de coalescence.

Le dispositif peut également comprendre une chambre d'admission reliée axialement à la partie centrale de la chambre de l'étage de mise en rotation solide, cette chambre d'admission étant alimentée tangentiellement dans le sens de la rotation dudit tambour afin d'engendrer une rotation de l'émulsion jusqu'à l'étage de mise en rotation solide.

Des dispositifs de séparation de fluides d'une émulsion contenant au moins un fluide et leurs modes de fonctionnement vont maintenant être décrits de façon non limitative en référence aux dessins dans lesquels :
La figure 1 représente une coupe verticale d'un dispositif de séparation de deux liquides d'une émulsion, selon deux plans décalés angulairement repérés sur la figure 2 par la référence I-I, l'axe du dispositif de séparation étant placé verticalement ;
La figure 2 représente une coupe radiale selon II-II, orientée vers le haut, d'un étage de mise en rotation solide du dispositif de séparation de la figure 1 ;
- La figure 3 représente une coupe radiale selon III-III, orientée vers le bas, d'un étage de migration et de coalescence du dispositif de séparation de la figure 1 ;
- La figure 4 représente une coupe radiale selon IV-IV, orientée vers le haut, de l'étage de migration et de coalescence du dispositif de séparation de la figure 1 ;
- La figure 5 représente une coupe radiale selon IV-IV, orientée vers le haut, d'un étage d'extraction du dispositif de séparation de la figure 1 ;
- La figure 6 représente une coupe verticale agrandie de la partie supérieure du dispositif de séparation de la figure 1, incluant l'étage d'extraction ;
- La figure 7 illustre des courbes de pression dans le dispositif de la figure 1 ;
- La figure 8 illustre des autres courbes de pression dans le dispositif de la figure 1 ;
- La figure 9 représente une demi coupe verticale de la partie supérieure d'une variante de réalisation du dispositif de séparation de la figure 1 ;
- La figure 10 représente une coupe verticale d'un autre dispositif de séparation, selon X-X de la figure 11 ;
- La figure 11 représente une coupe radiale selon XI-XI d'un étage de migration et de coalescence du dispositif de séparation de la figure 10, selon une première variante de réalisation ;
- La figure 12 représente une coupe radiale correspondante de l'étage de migration et de coalescence du dispositif de séparation de la figure 10, selon une seconde variante de réalisation ;
- La figure 13 représente une coupe verticale agrandie correspondante d'une partie de l'étage de migration et de coalescence du dispositif de séparation de la figure 10 ;
- La figure 14 représente une coupe verticale d'un autre dispositif de séparation, selon XIV-XIV de la figure 15 ; et
- La figure 15 représente une coupe radiale selon XV-XV d'un étage de migration et de coalescence du dispositif de séparation de la figure 10, selon une première variante de réalisation.

Tout d'abord, il convient de définir ce que l'on va entendre par « liquide entraîné circonférentiellement en rotation solide » dans la description qui suit. Un liquide est dit « entraîné circonférentiellement en rotation solide » lorsqu'il est contenu dans un compartiment qui est décentré par rapport à un axe de rotation et qui s'étend sur un secteur angulaire limité, entre des cloisons espacées circonférentiellement, de telle sorte que le compartiment tourne autour de l'axe de rotation et qu'ainsi le liquide subit les effets de la force centrifuge.

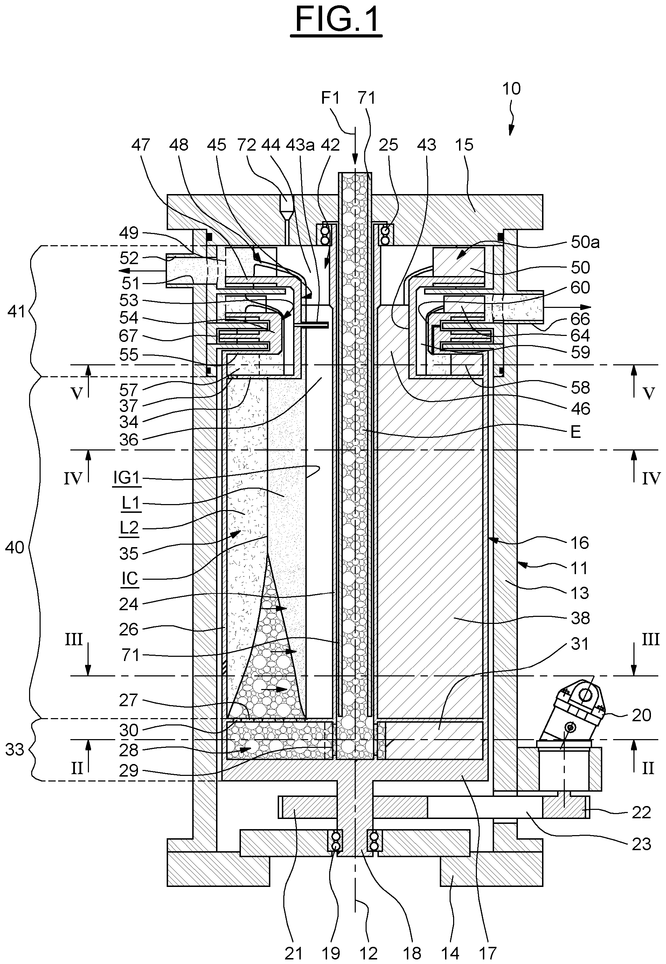

Un dispositif de séparation 10 illustré sur les figures 1 à 6 comprend un support fixe 11 à axe vertical 12, qui comprend une paroi périphérique cylindrique ou virole 13, une paroi radiale inférieure 14 et un couvercle radial supérieur 15.

A l'intérieur du support 11 est disposé un tambour rotatif 16 tournant autour de l'axe vertical 12. Ce tambour 16 comprend une paroi radiale inférieure 17, en forme de disque, située à distance au-dessus de la paroi radiale inférieure 14 et munie vers le bas d'une portion d'arbre cylindrique axial 18 engagée dans la paroi radiale inférieure 14 et montée sur cette dernière par l'intermédiaire d'un roulement 19 de montage tournant du tambour 16.

Le tambour 16 est entraîné en rotation par un moteur d'entraînement 20 par l'intermédiaire d'un moyen de liaison qui comprend par exemple une poulie 21 portée par l'arbre cylindrique 18, une poulie 22 portée par l'arbre du moteur 20 et une courroie 23 reliant ces poulies.

Le tambour 16 comprend un tube cylindrique axial intérieur 24, de petit diamètre, dont l'extrémité inférieure est solidaire de la paroi radiale inférieure 17 et dont l'extrémité supérieure est engagée dans le couvercle radial 15 et montée sur ce couvercle par l'intermédiaire d'un roulement 25 de montage tournant du tambour 16.

Le tambour 16 comprend une paroi périphérique cylindrique axiale 26 située intérieurement à faible distance de la virole 13, dont l'extrémité inférieure est solidaire de la périphérie de la paroi radiale inférieure 17 et dont l'extrémité supérieure est située à distance au-dessous du couvercle radial 15.

Le tambour 16 comprend une paroi radiale intérieure intermédiaire 27, de forme annulaire, qui est située du côté et à distance de la paroi radiale inférieure 17 et qui relie le tube cylindrique intérieur 24 et la paroi périphérique cylindrique 26. La paroi radiale inférieure 17 et la paroi radiale intermédiaire 27 forment entre elles une chambre d'entrée 28.

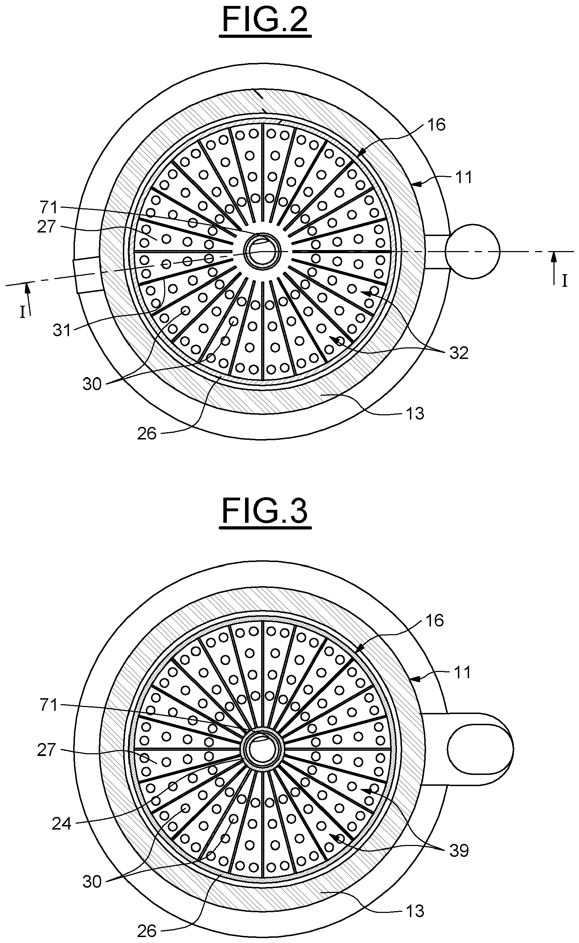

La portion du tube cylindrique intérieur 24, située entre la paroi radiale inférieure 17 et la paroi radiale intermédiaire 27, présente des ouvertures d'entrée radiale 29 réparties angulairement et situées proches de l'axe de rotation 12. La paroi radiale intermédiaire 27 présente une pluralité de passages traversants longitudinaux 30 de communication qui sont par exemple répartis sur toute la surface de la paroi radiale intermédiaire 27 (Figures 2 et 3).

Dans la chambre d'entrée 28 est aménagé un cloisonnement comprenant une pluralité de cloisons intérieures longitudinales 31, d'entraînement circonférentiel en rotation solide, s'étendant dans des plans contenant l'axe 12 et réparties angulairement (Figure 3). Ces cloisons longitudinales 31 s'étendent radialement depuis la paroi périphérique cylindrique 26 et jusqu'à faible distance du tube cylindrique intérieur 24 et définissent entre elles une pluralité de canaux ou espaces longitudinaux d'écoulement 32 répartis circonférentiellement.

Dans une variante de réalisation, la partie du tube axial 24 située entre la paroi radiale 17 et la paroi radiale intermédiaire 27 pourrait être supprimée.

Notamment dans le cas ci-dessus, le cloisonnement intérieur 31 pourrait être prolongé éventuellement jusqu'à l'axe 12 et pourrait aussi être prolongé à l'intérieur du tube axial 24, vers le haut au-delà de la cloison radiale intermédiaire 27.

Est ainsi défini, entre la paroi radiale inférieure 17 et la paroi radiale intérieure 27 et dans la chambre 28, un étage inférieur de mise en rotation solide 33.

Le tambour 16 comprend une paroi radiale intérieure intermédiaire 34, de forme annulaire, qui est située au-dessus et à plutôt grande distance de la paroi radiale intermédiaire 27 et au-dessous et à distance du couvercle radial 15. La paroi radiale intermédiaire 27 et la paroi radiale intermédiaire 34 forment entre elles une chambre 35 et forment une extrémité amont et une extrémité aval de cette chambre 35. La paroi radiale intermédiaire 34 s'étend à partir de la paroi périphérique cylindrique 26, sans atteindre le tube cylindrique intérieur 24, de façon à former un passage annulaire longitudinal intérieur 36 de communication entourant le tube cylindrique intérieur 24.

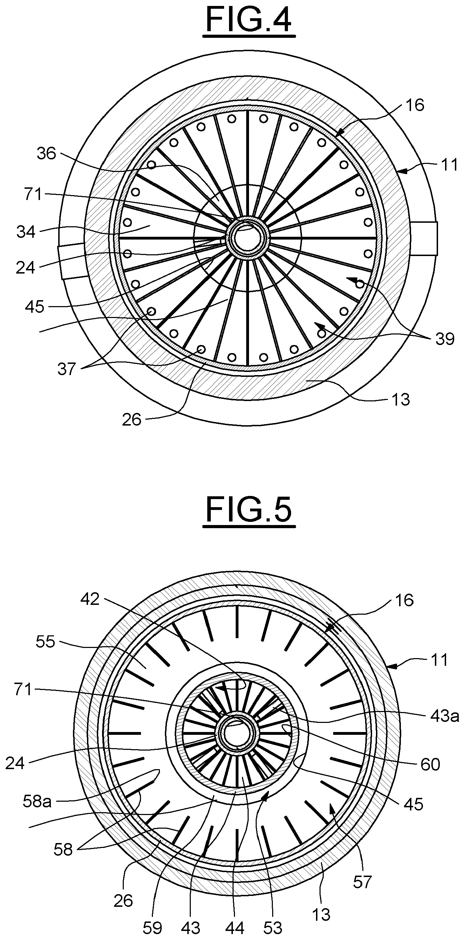

La paroi radiale intermédiaire 34 présente une pluralité de passages traversants longitudinaux extérieurs 37 qui sont aménagés à faible distance de la paroi périphérique cylindrique 26 et par exemple répartis sur un cercle (Figure 4). Ainsi, les passages traversants longitudinaux extérieurs 37 sont plus éloignés de l'axe de rotation 12 du tambour 16 que le passage annulaire longitudinal intérieur 36.

Dans la chambre 35 est aménagé un cloisonnement qui comprend une pluralité de cloisons intérieures longitudinales 38, d'entraînement circonférentiel en rotation solide, s'étendant dans des plans contenant l'axe 12 et réparties angulairement (figures 3 et 4).

Ces cloisons longitudinales 38 s'étendent radialement entre, et rejoignent, le tube cylindrique intérieur 24 et la paroi périphérique cylindrique 26 et s'étendent longitudinalement entre, et rejoignent, la paroi radiale intermédiaire 27 et la paroi radiale intermédiaire 34. Ces cloisons longitudinales 38 définissent entre elles une pluralité de canaux longitudinaux d'écoulement 39.

Ces canaux longitudinaux 39 présentent une extrémité amont du côté de la paroi radiale intermédiaire 27 et une extrémité aval du côté de la paroi radiale intermédiaire 34 et sont répartis circonférentiellement. Le nombre de cloisons longitudinales 38 peut être égal au nombre de cloisons longitudinales 31. Les cloisons longitudinales 38 peuvent être disposées dans le prolongement des cloisons longitudinales 31.

Est ainsi défini, entre la paroi radiale intermédiaire 27 et la paroi radiale intermédiaire 34 et dans la chambre 35, un étage intermédiaire de migration et de coalescence 40.

Entre la paroi radiale intermédiaire 34 et le couvercle radial supérieur 15 est défini un étage supérieur d'extraction 41 situé au-dessus de l'étage de migration et de coalescence 40.

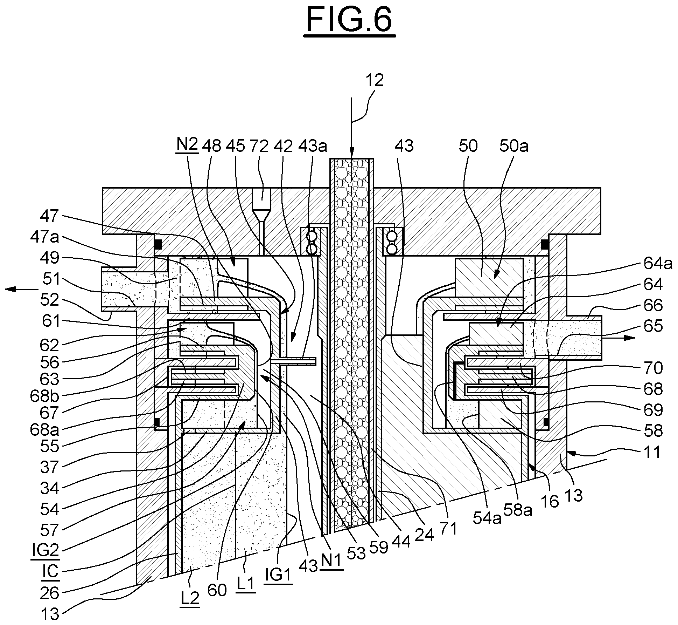

Comme illustré plus particulièrement sur la figure 6, cet étage d'extraction 41 comprend un déversoir intérieur 42 qui comprend une paroi cylindrique longitudinale 43 dont l'extrémité inférieure est reliée au bord annulaire intérieur de la paroi radiale intermédiaire 34 et qui s'étend vers le haut jusqu'à distance du couvercle radial 15.

Est ainsi défini un espace annulaire longitudinal d'écoulement 44 entre le tube cylindrique longitudinal 24 et la paroi cylindrique longitudinale 43, qui communique avec la chambre 35 par le passage annulaire longitudinal 36.

Ainsi, la face intérieure de la paroi cylindrique 43 forme un seuil annulaire de déversement 45 tourné du côté de l'axe de rotation 12 et s'étendant le long de l'espace d'écoulement longitudinal 44.

Dans l'espace annulaire longitudinal d'écoulement 44 est aménagée, de façon optionnelle, une pluralité de cloisons longitudinales 46, d'entraînement circonférentiel en rotation solide, qui s'étendent dans des plans contenant l'axe 12, entre le tube longitudinal 24 et la paroi longitudinale 43, et qui sont réparties angulairement. Ces cloisons longitudinales 46 prolongent vers le haut les cloisons longitudinales 38 de l'étage de migration et de coalescence 40, en traversant le passage longitudinal 36.

Le déversoir intérieur 42 comprend en outre une paroi radiale 47, de forme annulaire, dont le bord intérieur est relié au bord supérieur de la paroi cylindrique 43 et dont le bord extérieur est situé à faible distance de la paroi périphérique cylindrique 26, de façon à définir un espace aval périphérique d'évacuation 48 entre le couvercle radial 15 et la paroi radiale 47. Cet espace aval d'évacuation 48 communique intérieurement avec l'espace annulaire longitudinal d'écoulement 44 et est ouvert radialement du côté de la paroi périphérique cylindrique 26 de façon à former une sortie aval annulaire 49.

Dans l'espace aval d'évacuation 48 est aménagée une pluralité d'ailettes longitudinales 50, d'entraînement circonférentiel en rotation solide, qui sont disposées dans des plans contenant l'axe de rotation 12 et réparties angulairement et qui sont portées latéralement par la paroi radiale 47 et s'étendent vers le haut jusqu'à proximité du couvercle 15. Est ainsi formée une pompe centrifuge aval auto-adaptée 50a intégrée au tambour.

La paroi périphérique cylindrique 13 du support fixe 11 présente un orifice traversant d'évacuation 51 situé en face de l'espace aval d'évacuation 47 et prolongé par une conduite d'évacuation extérieure 52. Plusieurs orifices d'évacuation 51 répartis autour de la paroi périphérique cylindrique 13 pourraient être prévus.

L'étage d'extraction 41 comprend également un déversoir extérieur 53 qui est formé entre les parois radiales 34 et 47 et autour et à distance de la paroi cylindrique 43.

Le déversoir extérieur 53 comprend une paroi cylindrique longitudinale 54 située autour et à distance de la paroi cylindrique 43, dont le bord inférieur est à distance au-dessus de la paroi radiale intermédiaire 34 et dont le bord supérieur est à distance au-dessous de la paroi radiale 47.

Le déversoir extérieur 53 comprend en outre une paroi radiale 55, de forme annulaire, qui est située à distance au-dessus de la paroi radiale intermédiaire 34 et qui relie le bord supérieur de la paroi périphérique cylindrique 26 et le bord inférieur de la paroi cylindrique 54, ainsi qu'une paroi radiale 56, de forme annulaire, qui est située à distance au-dessous de la paroi radiale 47, dont le bord intérieur est relié au bord supérieur de la paroi cylindrique 54 et dont le bord extérieur est à faible distance de la paroi périphérique cylindrique 13 du support 11.

Est ainsi défini un espace intermédiaire d'écoulement 57, de forme annulaire, entre les parois radiales 34 et 55 et à l'intérieur de la partie d'extrémité supérieure de la paroi périphérique cylindrique 26, cet espace intermédiaire d'écoulement 57 communiquant avec la chambre 35 par l'intermédiaire des passages traversants longitudinaux extérieurs 37 de la paroi radiale 34.

Dans l'espace intermédiaire d'écoulement 57 est aménagée une pluralité d'ailettes longitudinales 58 disposées dans des plans contenant l'axe de rotation 12 et réparties angulairement ou circonférentiellement, ces ailettes longitudinales 58 étant reliées à la paroi périphérique cylindrique 26 et aux parois radiales 34 et 55 (figure 5). Le nombre d'ailettes longitudinales 58 peut être égal au nombre de cloisons longitudinales 38. Les ailettes longitudinales 58 peuvent être disposées dans le prolongement des cloisons longitudinales 38.

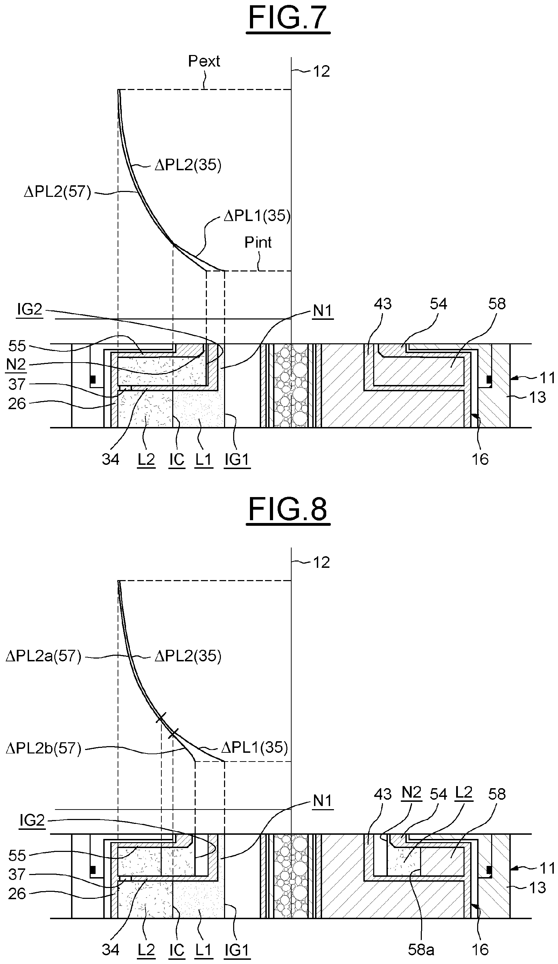

Selon la variante de réalisation illustrée sur les figures 1 et 8, les bords intérieurs longitudinaux 58a des ailettes longitudinales 58 sont situées à distance à l'extérieur de la face intérieure de la paroi cylindrique 54. Selon une autre variante de réalisation illustrée sur la figure 7, les ailettes longitudinales 58 sont prolongées jusqu'à la paroi longitudinale 43.

Est également défini un espace longitudinal d'écoulement 59, de forme annulaire, entre la paroi cylindrique 43 et la paroi cylindrique 54, qui communique avec l'espace intermédiaire d'écoulement 57. La face intérieure de la paroi cylindrique 54 forme un seuil annulaire de déversement 60 tourné du côté de l'axe de rotation 12 et s'étendant le long de l'espace longitudinal d'écoulement 59.

La paroi périphérique cylindrique 13 du support fixe 11 porte une paroi radiale intérieure 61, de forme annulaire, située à faible distance au-dessous de la paroi radiale 47 et à distance de la paroi radiale 56 et s'étendant jusqu'à proximité de la paroi cylindrique 43. La paroi radiale 47 est munie, du côté de la paroi radiale 61, d'ailettes radiales 47a d'entraînement circonférentiel pour former un joint tournant de liquide. Selon une variante de réalisation, une garniture formant un joint mécanique pourrait être placée entre la paroi radiale tournante 47 et la paroi radiale fixe 61.

Est également défini un espace périphérique aval d'évacuation 62, de forme annulaire, entre la paroi radiale 56 et la paroi radiale 61. Cet espace aval d'évacuation 62 communique avec l'espace longitudinal d'écoulement 59 et est ouvert radialement du côté de la paroi périphérique cylindrique 26 de façon à former une sortie aval 63, de forme annulaire.

Dans l'espace aval d'évacuation 62 est aménagée une pluralité d'ailettes longitudinales 64, d'entraînement circonférentiel en rotation solide, qui s'étendent dans des plans contenant l'axe de rotation 12, qui sont réparties angulairement et qui sont portées latéralement par la paroi radiale 56. Est ainsi formée une pompe centrifuge aval auto-adaptée et intégrée 64a.

La paroi périphérique cylindrique 13 du support fixe 11 présente un orifice traversant d'évacuation 65 situé en face de l'espace aval d'évacuation 62 et prolongé par une conduite d'évacuation extérieure 66. Plusieurs orifices d'évacuation 51 répartis autour de la paroi périphérique cylindrique 13 pourraient être prévus.

La paroi cylindrique 43 porte, radialement, des tubes ou conduits radiaux de communication 43a en saillie dans l'espace longitudinal d'écoulement 44, de façon à mettre en communication cet espace longitudinal d'écoulement 44 et l'espace longitudinal d'écoulement 59.

Il résulte de ce qui précède, radialement, que les passages longitudinaux extérieurs 37 sont plus éloignés de l'axe de rotation 12 que le passage longitudinal intérieur 36, que le seuil de déversement 60 du déversoir extérieur 53 est plus éloigné de l'axe de rotation 12 que le seuil de déversement 45 du déversoir intérieur 42, et que le seuil de déversement 60 du déversoir extérieur 53 est situé entre les passages traversants 37 de la paroi radiale 34 et le seuil de déversement 45 du déversoir intérieur 42.

Dans l'espace entre les parois radiales 55 et 56, la paroi longitudinale 54 du tambour 16 et la paroi périphérique cylindrique 13 du support fixe 11 est aménagé un joint tournant de fluide 67. Ce joint 67 comprend une paroi radiale centrale 68 portée par la paroi longitudinale 54 et s'étendant jusqu'à proximité de la paroi périphérique cylindrique 13 et des parois radiales 69 et 70 portées par la paroi périphérique cylindrique 13, disposées entre et à proximité respectivement des parois radiales 55 et 68 et des parois radiales 56 et 68. La paroi radiale centrale 68 est munie sur ses faces opposées d'ailettes radiales 68a et 68b d'entraînement circonférentiel. La paroi longitudinale 54 présente au moins un orifice traversant 54a, de petit diamètre, mettant en communication l'espace intermédiaire d'écoulement 57 et l'espace interne du joint de fluide 67. Selon une variante de réalisation, le joint tournant liquide intégré 67 pourrait être remplacé par des garnitures formant des joints mécaniques.

Le support fixe 11 est équipé d'une conduite cylindrique axiale d'amenée 71 qui traverse le couvercle 15, qui s'étend à l'intérieur du tube cylindrique 24 et dont l'extrémité inférieure est à distance de la paroi radiale inférieure 17 du tambour 16 et est située dans la zone de la paroi radiale intermédiaire 27.

Selon une variante de réalisation, la conduite axiale 71 pourrait être raccourcie ou supprimée et une chambre d'admission fixe communiquant avec l'extrémité supérieure de la conduite axiale 71 éventuellement raccourcie ou du tube axiale 24 pourrait être aménagée au-dessus de la paroi radiale fixe 15. Cette chambre d'admission fixe pourrait être alimentée tangentiellement afin d'engendrer une rotation de l'émulsion à l'intérieur du tube axial 24 dans la sens de rotation du tambour, pouvant persister jusqu'à l'étage de mise en rotation solide 33.

Selon une autre variante de réalisation, l'amenée pourrait être réalisée axialement au travers de la paroi radiale 17 et de l'arbre axial 18, le tube axial 24 étant alors obstrué dans la zone de la paroi radiale intermédiaire 27.

Le couvercle 15 du support 11 présente, dans sa partie centrale, au moins un orifice traversant 72 qui communique avec l'espace de liaison entre l'espace d'écoulement longitudinal 44 et l'espace aval d'évacuation 48 du déversoir intérieur 42.

Le dispositif de séparation 10 peut fonctionner de la manière suivante.

Le tambour 16 est entraîné en rotation grâce au moteur 20 et tourne à une vitesse substantiellement constante adaptée.

Une émulsion E contenant un liquide léger L1 et un liquide lourd L2, à séparer, pénètre dans le conduit fixe d'amenée 71 et est introduite, au travers des ouvertures d'entrée radiale 29 du tube tournant 24, dans les espaces d'écoulement 32 de la chambre 28 de l'étage de mise en rotation solide 33, dans laquelle elle est mise en rotation solide sous l'effet des cloisons longitudinales 31.

Ensuite, l'émulsion E traverse les passages traversants longitudinaux 30 de la paroi radiale intermédiaire 27 et pénètre dans les canaux longitudinaux d'écoulement 39 de la chambre 35 de l'étage de migration et de coalescence 40, dans laquelle la rotation solide est maintenue sous l'effet des cloisons longitudinales 38, jusqu'à la paroi radiale intermédiaire 34 d'extrémité aval de la chambre 35.

Lors de l'écoulement longitudinal d'amont en aval, sous l'effet de la force centrifuge résultant de la rotation du tambour 16 et dans chacun des canaux longitudinaux d'écoulement 39, le liquide léger L1 tend à se déplacer vers l'axe de rotation 12 et le liquide lourd L2 tend à se déplacer vers la paroi périphérique 26, de telle sorte que les liquides L1 et L2 se séparent avant d'atteindre la paroi radiale intermédiaire 34 d'extrémité aval de l'étage de migration et de coalescence 40.

Il en résulte qu'au moins dans la partie terminale de la chambre 35, le liquide léger L1 forme un cylindre intérieur présentant une surface libre substantiellement cylindrique IG1 tournée du côté de l'axe de rotation 12 et située à distance du tube longitudinal 24 et que le liquide lourd L2 forme un cylindre extérieur en contact avec la paroi périphérique cylindrique 26, ces cylindres intérieur et extérieur de liquides L1 et L2 présentant une interface cylindrique IC qui est située entre le passage longitudinal intérieur 36 et les passages traversants extérieurs 37 de la paroi radiale intermédiaire 34. Les extrémités des tubes de liaison 43a sont à l'intérieur de la surface libre cylindrique IG1.

Ensuite, le liquide léger L1 traverse le passage longitudinal intérieur 36 de la paroi radiale intermédiaire 34, puis s'écoule longitudinalement dans l'espace longitudinal d'écoulement 44 sur le seuil de déversement 45 du déversoir intérieur 42 sous la forme d'une nappe cylindrique N1 dont la surface est dans le prolongement de la surface libre cylindrique IG1. La rotation solide peut être maintenue grâce aux cloisons longitudinales 46.

Ensuite, le liquide léger L1 se déverse, radialement vers l'extérieur, dans l'espace aval d'évacuation 48, puis s'écoule au travers de la sortie aval 49 du tambour 16, puis s'écoule au travers de l'orifice de sortie 51 du support fixe 11 et enfin s'écoule dans la conduite d'évacuation 52. Sous certaines conditions, le liquide L1 peut former, dans la périphérie de l'espace aval d'écoulement 48 et sur la zone périphérique correspondante de la paroi périphérique 13 du support 11, une couche annulaire.

Parallèlement, le liquide lourd L2 traverse les passages longitudinaux extérieurs 37 de la cloison 34 et pénètre dans l'espace intermédiaire d'écoulement 57. Puis, le liquide lourd L2 s'écoule radialement vers l'intérieur dans l'espace intermédiaire d'écoulement 57, dans lequel la rotation solide est maintenue grâce aux ailettes longitudinales 58, au moins dans la périphérie de cet espace d'écoulement 57. Puis, le liquide lourd L2 s'écoule longitudinalement dans l'espace longitudinal d'écoulement 59 sur le seuil de déversement 60 du déversoir extérieur 53 sous la forme d'une nappe cylindrique N2 présentant une surface libre cylindrique IG2 formée à distance de la face extérieure de la paroi longitudinale 43. La pression sur les surfaces libres IG1 et IG2 est la même du fait de l'existence des conduits radiaux 43a.

Ensuite, le liquide lourd L2 se déverse, radialement vers l'extérieur, dans l'espace aval d'évacuation 62, puis s'écoule au travers de la sortie aval 63 du tambour 16, puis s'écoule au travers de l'orifice de sortie 65 du support fixe 11 et enfin s'écoule dans la conduite d'évacuation 66. Sous certaines conditions, le liquide L2 peut former, dans la périphérie de l'espace aval d'écoulement 62 et sur la zone périphérique correspondante de la paroi périphérique 13 du support 11, une couche annulaire.

Les épaisseurs radiales des nappes N1 et N2 de liquides L1 et L2 sur les seuils de déversement 45 et 60, dépendent notamment de la vitesse de rotation du tambour 16, du débit d'émulsion traité, des proportions respectives des liquides L1 et L2 dans l'émulsion E et des positions radiales respectives des seuils de déversement 45 et 60. Proportionnellement aux différentes autres épaisseurs des liquides L1 et L2, les épaisseurs des nappes N1 et N2 sont faibles.

Dans le cas où la séparation de l'émulsion E induit la production d'une phase gazeuse à l'intérieur des surfaces libres cylindriques IG1 et IG2, cette phase gazeuse est évacuée par l'orifice 72 du couvercle supérieur 15.

Les écoulements qui viennent d'être décrits peuvent être atteints dans la mesure où les espaces longitudinaux 44 et 59 ne sont pas engorgés et dans la mesure où l'interface IC est établie dans une position radiale intermédiaire entre le passage longitudinal intérieur 36 et les passages longitudinaux extérieurs 37 de la paroi radiale intermédiaire 34, de telle sorte que seul le liquide léger L1 sorte par le passage longitudinal intérieur 36 et que seul le liquide lourd L2 sorte par les passages longitudinaux extérieurs 37.

Pour une position radiale déterminée des seuils de déversement 45 et 60 et étant entendu que les gaz au-dessus des surfaces libres IG1 et IG2 sont à la même pression du fait de l'existence des conduits de liaison 43a, la position radiale de l'interface IC entre le liquide léger L1 et le liquide lourd L2 dépend principalement de la différence entre les densités des liquides L1 et L2 et de la vitesse de rotation du tambour 16, notamment pour les raisons suivantes.

Dans la chambre de migration et de coalescence 35, la présence des ailettes longitudinales d'entraînement circonférentielle 38, qui tiennent entre elles des portions circonférentielles, sur des secteurs angulaires limités, de l'émulsion E puis du liquide léger L1 et du liquide lourd L2 au moins dans la partie terminale de la chambre 35, impose une évolution radiale des vitesses circonférentielles de type rotation solide, c'est-à-dire que les vitesses circonférentielles de l'émulsion E puis des liquides L1 et L2 évoluent proportionnellement au rayon.

Dans l'espace d'écoulement intermédiaire 57, la présence des ailettes longitudinales d'entraînement circonférentielle 58, qui tiennent entre elles des portions circonférentielles du liquide lourd L2, impose une évolution radiale des vitesses tangentielles du liquide L2 de type rotation solide, c'est-à-dire que les vitesses circonférentielles du liquide L2 évoluent proportionnellement au rayon.

Dans le cas où les ailettes d'entraînement circonférentiel 58 s'étendent vers l'intérieur au moins jusqu'au seuil de déversement extérieur 60, la rotation solide est maintenue dans l'espace d'écoulement intermédiaire 57 jusqu'à ce seuil de déversement 60.

Dans le cas où les bords intérieurs longitudinaux 58a des ailettes longitudinales d'entraînement circonférentiel 58 sont situés à distance à l'extérieur du seuil de déversement extérieur 60, la rotation solide est maintenue dans l'espace d'écoulement intermédiaire 57 jusqu'à ces bords intérieurs longitudinaux 58a. Passé ces bords 58a, l'écoulement du liquide L2 a tendance à devenir cyclonique, les vitesses circonférentielles du liquide L2 ayant tendance à devenir inversement proportionnelles au rayon.

On va maintenant décrire les conditions de pressions dans les liquides L1 et L2 de part et d'autre de la paroi radiale 34, d'une part dans la partie aval de la chambre 35 de l'étage de migration et de coalescence 40 et d'autre part dans l'espace intermédiaire 57.

Sur la figure 7 est illustré le cas où les ailettes d'entraînement circonférentiel 58 dans l'espace d'écoulement intermédiaire 57 s'étendent vers l'intérieur au moins jusqu'au seuil de déversement extérieur 60.

Sur la paroi périphérique 26, les pressions Pₑₓₜ du liquide L2 sont substantiellement égales de part et d'autre de la paroi radiale 34, dans la chambre 35 et dans l'espace intermédiaire 57 qui sont reliés par les passages traversants de communication 37.

Sur la surface libre intérieure substantiellement cylindrique IG1 du liquide L1, dans la chambre 35 et dans l'espace longitudinal 44, et sur la surface libre intérieure substantiellement cylindrique IG2 du liquide L2, à l'endroit de l'espace de communication 57 et dans l'espace longitudinal 59, les pressions Pᵢₙₜ sont substantiellement égales.

Dans la chambre 35 et radialement de l'extérieur vers l'intérieur, la pression diminue selon deux courbes successives. Entre la paroi périphérique 26 et l'interface IC, la pression décroît dans le liquide lourd L2 depuis la pression Pₑₓₜ, selon une courbe de pression ΔPL2(35). Puis, entre l'interface IC et la surface libre IG1, la pression décroît dans le liquide léger L1 jusqu'à la pression Pᵢₙₜ, selon une courbe de pression ΔPL1(35).

Dans l'espace intermédiaire 57 et radialement de l'extérieur vers l'intérieur, entre la paroi périphérique 26 et la surface libre intérieure IG2, la pression décroît dans le liquide lourd L2 depuis la pression Pₑₓₜ jusqu'à la pression Pᵢₙₜ, selon une courbe de pression ΔPL2(57).

Les courbes de pression ΔPL2(35), ΔPL1(35) et ΔPL2(57) dépendent des densités des liquides L1 et L2 et sont respectivement formées, substantiellement, par des portions de paraboles concaves du côté de l'axe de rotation 12. La courbe de pression ΔPL2(57) et la courbe de pression ΔPL2(35) suivent substantiellement la même courbure.

Sur la figure 8 est illustré le cas où les ailettes d'entraînement circonférentiel 58 ne s'étendent pas vers l'intérieur jusqu'au seuil de déversement extérieur 60 et présentent les bords intérieurs 58a, les épaisseurs des liquides L1 et L2, dans la chambre 35, étant similaires.

Dans la chambre 35, les conditions de pressions sont similaires à celles de l'exemple précédent.

Par contre, dans l'espace intermédiaire 57 et radialement de l'extérieur vers l'intérieur, entre la paroi périphérique 26 et les bords intérieurs 58a des ailettes d'entraînement circonférentiel 58, la pression décroît dans le liquide lourd L2 depuis la pression Pₑₓₜ, selon une courbe ΔPL2a(57), comme dans l'exemple précédent. Par contre, entre les bords intérieurs 58a des ailettes d'entraînement circonférentiel 58 et la surface libre intérieure IG2, la pression décroît dans le liquide lourd L2 jusqu'à la pression Pᵢₙₜ selon une autre courbe ΔPL2b(57).

Du fait que l'écoulement tend à être cyclonique entre les bords intérieurs 58a des ailettes d'entraînement circonférentiel 58 et la surface libre intérieure IG2 comme indiqué précédemment, cette décroissance selon la courbe ΔPL2b(57) est plus rapide que la décroissance établie selon l'exemple de la figure 7 dans lequel la rotation solide du liquide L2 est maintenue au moins jusqu'au seuil de déversement 60. Cette courbe ΔPL2b(57) est formée, substantiellement, par une portion d'hyperbole convexe du côté de l'axe de rotation 12.

C'est pourquoi, dans l'exemple illustré sur la figure 8, ayant conservé la position radiale du seuil de déversement intérieur 44 et la position radiale de l'interface IC de l'exemple illustré sur la figure 7, le seuil de déversement extérieur 60 de la figure 8 présente un diamètre plus grand que celui du seuil de déversement 60 de l'exemple illustré sur la figure 7.

La présence de l'écoulement cyclonique selon l'exemple de la figure 8 permet d'obtenir une distance radiale entre les seuils de déversement 45 et 60 plus grande que dans le cas de la figure 7. Ainsi, le dispositif de séparation 10 peut séparer des liquides ayant des densités choisies dans une plage plus grande et il est alors possible de séparer des liquides L1 et L2 ayant des densités très voisines.

Selon une variante d'utilisation, l'émulsion E est amenée dans la conduite d'amenée 71 grâce à une pompe volumétrique (non représentée), l'orifice 72 du couvercle 15 est à la pression atmosphérique et il existe un besoin d'avoir dans les sorties 51 et 65 des charges de pression supérieures à la pression atmosphérique, par exemple dans le cas où ces sorties 51 et 65 sont reliées à des conduites d'évacuation 52 et 66 engendrant des pertes de charge. Dans ce cas, les pompes centrifuges aval 50a et 64a formées par les ailettes aval 50 et 64 servent à fournir aux débits de liquides L1 et L2, qui proviennent des seuils de déversement 44 et 60 et se déversent radialement vers l'extérieur, des charges de pressions permettant de compenser ces pertes de charge.

Selon une autre variante d'utilisation, l'orifice 72 du couvercle 15 est relié à une pompe à vide pour générer une dépression d'aspiration par exemple inférieure à la pression atmosphérique permettant d'aspirer l'émulsion E. Les pompes centrifuges aval 50a et 64a formées par les ailettes aval 50 et 64 servent à fournir aux débits de liquides L1 et L2, qui se déversent, les charges de pression permettant de compenser la dépression d'aspiration et éventuellement les pertes de charge de l'exemple précédent.

Selon une autre variante d'utilisation, si la pression intérieure imposée au travers de l'orifice 72 est inférieure à la pression dans les sorties 51 et 65, pour une différence donnée, il se produit une autorégulation du niveau radial des liquides L1 et L2 dans les espaces aval d'écoulement 48 et 62, quels que soient les débits et quel que soit le rapport entre les densités des liquides L1 et L2.

Selon une autre variante d'utilisation, les espaces aval d'écoulement 48 et 62, peuvent communiquer directement avec l'atmosphère au travers des passages traversants 51 et 65 de la paroi périphérique du support 11, en vue d'une évacuation par déversement des liquides L1 et L2. En particulier dans ce cas, les ailettes aval 50 et 58 pourraient être supprimées si l'émulsion E est amenée sous pression et si la pression intérieure est égale à la pression atmosphérique.

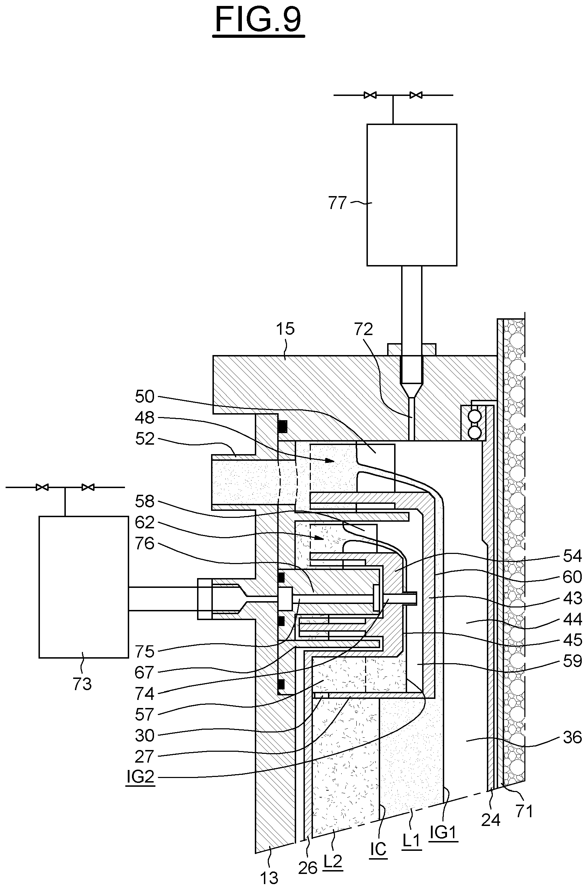

Selon une autre variante d'utilisation illustrée sur la figure 9, les conduits de liaison 43a sont supprimés. L'espace d'écoulement 59 est, cette fois, relié à une source de pression/dépression de gaz 73, par l'intermédiaire d'un conduit radial 74 traversant la paroi longitudinale 54 et d'un conduit radial 75 traversant une paroi radiale intérieure 76, de forme annulaire, du support 11, aménagée dans le joint tournant de liquide 67, tandis que l'orifice 72 est relié à une source de pression/dépression de gaz 77.

Ainsi, la pression délivrée par la source 77 agit sur la surface libre IG1 du liquide L1, dans le déversoir intérieur 42 et la pression délivrée par la source 73 agit sur la surface libre IG2 du liquide L2 dans le déversoir extérieur 53.

En faisant varier la différence entre les pression/dépression délivrées par les sources 73 et 77, il est alors possible de faire varier la position radiale de l'interface IC et de l'adapter de façon à positionner radialement l'interface IC entre le seuil de déversement intérieur 60 et les orifices traversants longitudinaux 30 afin d'obtenir une séparation satisfaisante.

Ainsi, la position réelle souhaitée de l'interface IC peut être réglée ou régulée en fonction des variations des densités des liquides L1 et L2 et/ou en fonction des variations de la position de l'interface IC qui pourraient être détectées par un appareil de mesure.

Dans un cas particulier, l'une des sources de pression/dépression peut être la pression atmosphérique. Seule l'autre source de pression est alors réglable ou régulable.

En ce qui concerne le joint tournant de liquide 67, son fonctionnement peut être le suivant.

Du liquide L2 provenant de l'espace intermédiaire d'écoulement 57 est introduit par l'orifice traversant 54a. Sous l'effet des ailettes radiales 68a et 68b portées par la paroi radiale tournante 68 en vis-à-vis des parois radiales fixes 69 et 70, ce liquide est maintenu dans la partie périphérique du joint, entre les parois 69 et 70, ce qui crée une étanchéité entre l'espace aval d'écoulement 62 et l'espace, à l'atmosphère, entre la paroi périphérique 13 du support 11 et la paroi périphérique 26 du tambour 16.

De façon équivalente, sous l'effet des ailettes 47a portée par la paroi radiale tournante 47 en vis-à-vis de la paroi radiale fixe 61, le liquide L1 est refoulé radialement vers l'extérieur, ce qui crée une étanchéité entre le déversoir extérieur 53 et l'espace aval d'écoulement 48.

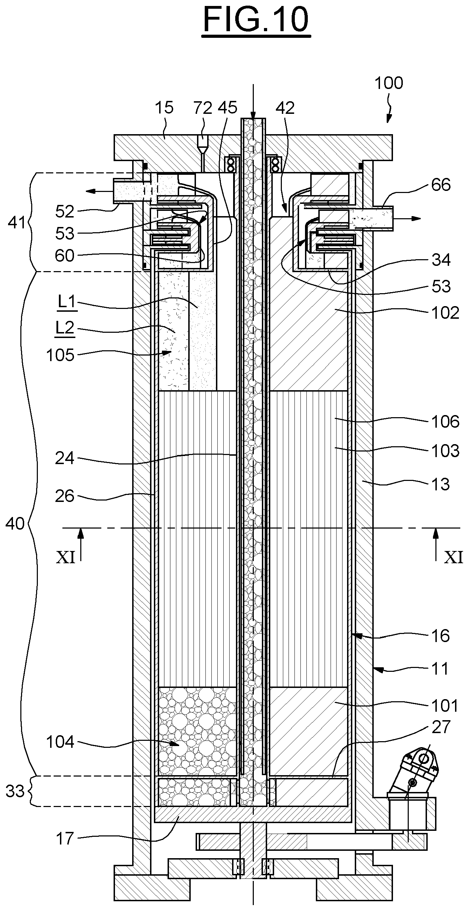

En se reportant maintenant aux figures 10 à 12, on peut voir qu'est illustré un dispositif de séparation 100 qui se différencie du dispositif de séparation 10 par la structure du cloisonnement agencé dans la chambre 35 de l'étage de migration et de coalescence 40, les autres parties étant équivalentes.

Ce cloisonnement comprend, dans la partie amont de la chambre 35 adjacente à la paroi radiale intermédiaire 27, une pluralité de cloisons longitudinales 101 et, dans sa partie aval adjacente à la paroi radiale intermédiaire 34, une pluralité de cloisons longitudinales 102 et, dans sa partie longitudinale médiane, une pluralité de cloisons longitudinales 103.

Les cloisons longitudinales 101 et les cloisons longitudinales 102 sont agencées, de façon équivalente aux cloisons 38 du dispositif de séparation 10, de façon à former des pluralités de canaux longitudinaux d'écoulement 104 et 105 répartis circonférentiellement.

Les cloisons longitudinales 103 sont agencées de façon à former une pluralité de canaux longitudinaux intermédiaires d'écoulement 106 répartis circonférentiellement et radialement. Ainsi, les canaux longitudinaux d'écoulement 106 présentent des sections inférieures aux canaux longitudinaux d'écoulement 104 et 105 et sont en un nombre plus important.

A titre d'exemple, la longueur des canaux longitudinaux 104 peut être égale à 15% de la longueur de la chambre 35, la longueur des canaux longitudinaux 106 peut être égale à 40% de la longueur de la chambre 35 et la longueur des canaux longitudinaux 105 peut être égale à 35% de la longueur de la chambre 35.

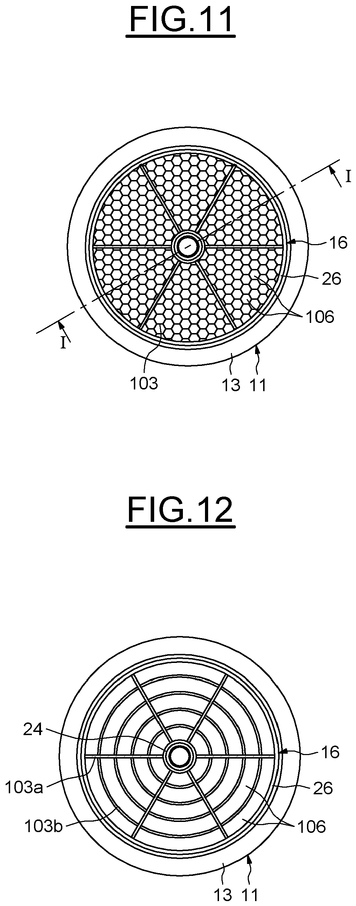

Selon une variante de réalisation illustrée sur la figure 11, les cloisons longitudinales 103 sont agencées de telle sorte qu'en section, les canaux longitudinaux d'écoulement 106 forment des nids d'abeilles.

Selon une autre variante de réalisation illustrée sur la figure 11, les cloisons longitudinales 103 comprennent des cloisons longitudinales 103a réparties angulairement et des cloisons longitudinales 103b cylindriques et distantes les unes des autres dans le sens radial.

Grâce à l'existence des cloisons longitudinales amont 101, puis des cloisons longitudinales intermédiaires 103 puis des cloisons longitudinales aval 102, il se produit un entraînement circonférentiel en rotation solide dans les canaux longitudinaux amont 104 puis dans les canaux longitudinaux intermédiaires 106 puis dans les canaux longitudinaux aval 105, de l'émulsion puis des liquides L1 et L2, de façon équivalente à ce qui a été décrit précédemment à propos du dispositif de séparation 10.

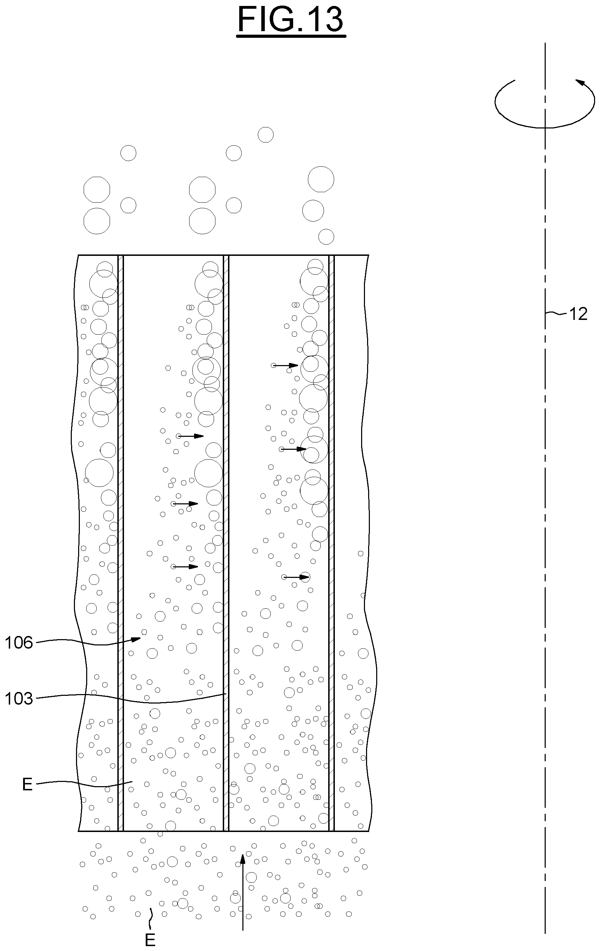

Cette fois cependant, comme illustré sur la figure 13, l'existence des canaux longitudinaux intermédiaires 106, en beaucoup plus grand nombre et répartis circonférentiellement et radialement, permet de produire une migration et coalescence des liquides L1 et L2 dans chacun de ces canaux longitudinaux intermédiaires 106. Il peut s'ensuivre une amélioration des performances de la séparation des liquides L1 et L2, qui peut permettre une réduction des dimensions du dispositif de séparation.

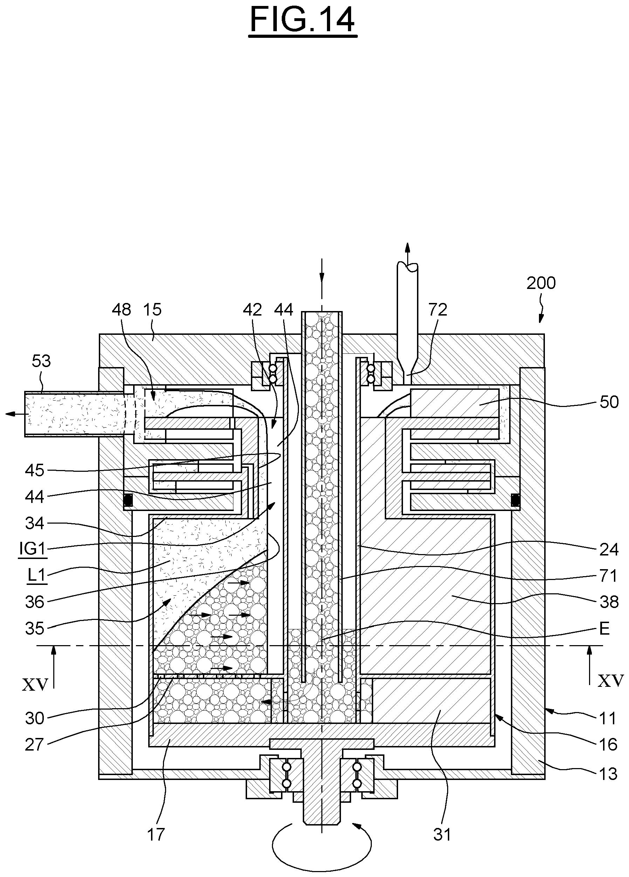

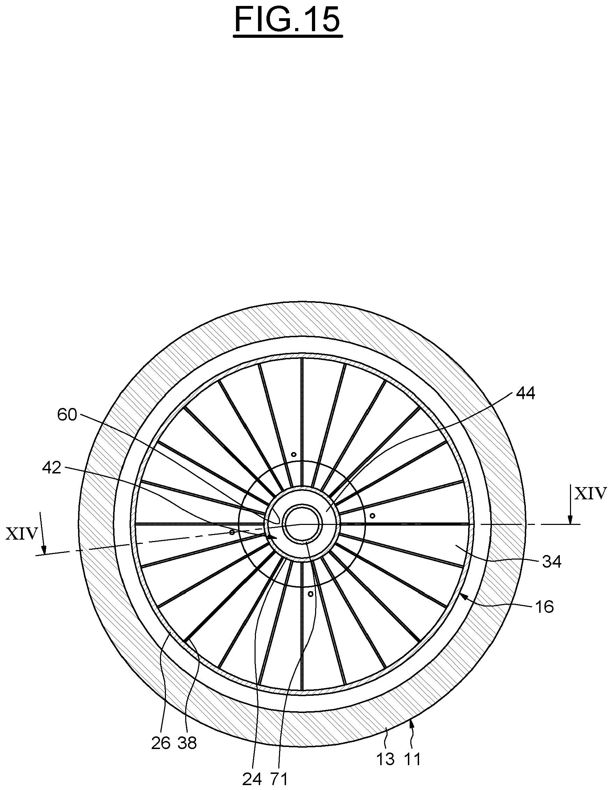

En se reportant maintenant aux figures 14 à 15, on peut voir qu'est illustré un dispositif de séparation 200 qui se différencie du dispositif de séparation 10 par le fait que le déversoir extérieur 53 est supprimé et que la cloison intermédiaire 34 ne présente plus les passages traversants 37, les autres parties étant équivalentes.

Ce dispositif de séparation 200 est plus particulièrement adapté pour extraire d'une émulsion E un gaz libre véhiculé par un liquide L1 sous la forme de bulles.

De façon équivalente à ce qui a été décrit précédemment, le liquide L1, introduit dans la chambre 35, est soumis à un entraînement en une rotation solide sous l'effet de la rotation du tambour 16, présente une surface libre cylindrique IG1, passe au-dessus du seuil de déversement 45 du déversoir intérieur 42 puis se déverse dans l'espace aval d'écoulement 48 pour être évacué. Le gaz extrait du liquide L1 et présent dans l'espace entre le tube cylindrique 24 et la surface libre cylindrique IG1 est évacué par une pluralité d'orifices 72 aménagés dans le couvercle 15.

Les séparateurs qui viennent d'être décrits pourraient être disposés à l'envers, c'est-à-dire que leur étage de séparation pourrait être en bas. En outre, leur axe principal pourrait être incliné ou horizontal.

La présente invention ne se limite pas aux exemples ci-dessus décrits. Bien d'autres variantes de réalisation sont possibles, sans sortir du cadre de l'invention.

## Revendications

1. Dispositif de séparation de fluides non miscibles de densités différentes d'une émulsion contenant au moins un liquide, comprenant un tambour rotatif longitudinal présentant un axe longitudinal de rotation et dans lequel aval le tambour comprend intérieurement, longitudinalement d'amont en et entre au moins une entrée amont (29) et des sorties aval (49, 72) :
un étage de mise en rotation solide (33) comprenant au moins une chambre dans laquelle est aménagée au moins une cloison intérieure longitudinale (31) d'entraînement circonférentiel en rotation solide délimitant au moins un espace d'écoulement (32) communiquant avec ladite entrée ;
un étage de migration et de coalescence (40) comprenant au moins une chambre (35) dans laquelle est aménagé au moins un cloisonnement intérieur longitudinal d'entraînement circonférentiel en rotation solide, délimitant une pluralité de canaux longitudinaux d'écoulement (39) présentant respectivement une extrémité amont communiquant avec ledit espace d'écoulement dudit étage de mise en rotation solide et une extrémité aval reliée auxdites sorties, ledit cloisonnement comprenant au moins une cloison longitudinale (38) délimitant au moins l'un desdits canaux longitudinaux et s'étendant jusqu'à ladite extrémité aval ;
et un étage d'extraction (41) comprenant au moins un déversoir de liquide (42) comprenant un seuil de déversement (45) tourné du côté dudit axe de rotation et s'étendant le long d'un espace d'écoulement longitudinal (44) communiquant, en amont, avec lesdits canaux longitudinaux (39) de l'étage de migration et de coalescence par au moins un passage longitudinal (36) et comprenant, en aval, un espace aval d'évacuation de liquide (48) communiquant avec l'espace d'écoulement longitudinal et relié à l'une desdites sorties aval ;
dans lequel ladite entrée amont (29) débouche dans une partie dudit espace d'écoulement de l'étage de mise en rotation solide, située proche de l'axe de rotation ;
et dans lequel le tambour (16) est équipé d'une paroi intérieure radiale (27) séparant la chambre de l'étage de mise en rotation solide (33) et la chambre de l'étage de migration et de coalescence (40), cette paroi intérieure radiale étant munie de passages traversants (30).

2. Dispositif selon la revendication 1, comprenant un conduit axial (71) ou un tube axial (24) solidaire du tambour pour l'amenée de l'émulsion dans la partie centrale de la chambre (28) de l'étage de mise en rotation solide (33).

3. Dispositif selon l'une des revendications 1 et 2, dans lequel le cloisonnement de l'étage de migration et de coalescence (40) définit, d'amont en aval, une pluralité de canaux longitudinaux (39) répartis circonférentiellement.

4. Dispositif selon l'une des revendications 1 et 2, dans lequel le cloisonnement de l'étage de migration et de coalescence (40) définit, d'amont en aval, une pluralité intermédiaire de canaux longitudinaux (106) répartis circonférentiellement et radialement, suivie d'une pluralité aval de canaux longitudinaux répartis circonférentiellement dont chaque canal communique avec plusieurs des canaux de la première pluralité de canaux.

5. Dispositif selon l'une des revendications 1 et 2, dans lequel le cloisonnement de l'étage de migration et de coalescence (40) définit, d'amont en aval, une pluralité amont de canaux longitudinaux répartis circonférentiellement, suivie d'une pluralité intermédiaire de canaux longitudinaux (106) répartis circonférentiellement et radialement dont plusieurs canaux communiquent avec chaque canal de la pluralité amont de canaux, suivie d'une pluralité aval de canaux longitudinaux répartis circonférentiellement dont chaque canal communique avec plusieurs des canaux de la première pluralité de canaux.

6. Dispositif selon l'une quelconque des revendications précédentes, dans lequel l'étage d'extraction (41) comprend un déversoir (42) dont le seuil de déversement est annulaire et un espace aval d'évacuation annulaire (48) communiquant avec une sortie aval périphérique (49).

7. Dispositif selon l'une quelconque des revendications précédentes, dans lequel l'étage d'extraction comprend un déversoir (42) dont le seuil de déversement est proche de l'axe de rotation, l'espace aval d'évacuation de ce déversoir étant relié à une sortie aval de liquide (49) et à une sortie aval de gaz (72).

8. Dispositif selon l'une quelconque des revendications précédentes, comprenant des cloisons d'entraînement circonférentiel (50) placées dans l'espace aval d'écoulement.

9. Dispositif selon l'une quelconque des revendications précédentes, comprenant des ailettes d'entraînement circonférentiel (46) placées dans l'espace d'écoulement longitudinal.

10. Dispositif selon l'une quelconque des revendications précédentes, dans lequel l'étage d'extraction (41) comprend un déversoir intérieur (42) de liquide plus léger dont l'espace d'écoulement longitudinal (44) communique avec l'étage de migration et de coalescence (40) par un passage longitudinal intérieur (36) et un déversoir extérieur (53) d'un liquide plus lourd dont l'espace d'écoulement longitudinal (59) communique avec l'étage de migration et de coalescence (40) par un passage longitudinal extérieur (37) plus éloigné dudit axe de rotation que le passage longitudinal intérieur,
le seuil de déversement (60) du déversoir extérieur étant plus éloigné dudit axe de rotation que le seuil de déversement ((45) du déversoir intérieur,
le seuil de déversement (60) du déversoir extérieur étant situé, dans le sens radial, entre le passage longitudinal extérieur (37) et le seuil de déversement (60) du déversoir intérieur, et
le déversoir intérieur et le déversoir extérieur étant reliés à des sorties aval (49, 63) différentes par l'intermédiaire d'espaces aval d'évacuation (48, 62) différents.

11. Dispositif selon la revendication 10, comprenant des ailettes d'entraînement circonférentiel (58) placées dans l'espace intermédiaire d'écoulement (57) reliant le passage extérieur (37) et le déversoir extérieur (53).

12. Dispositif selon la revendication 11, dans lequel lesdites ailettes d'entraînement circonférentiel (58) présentent un bord intérieur (58a) situé à l'extérieur et à distance du seuil de déversement (60) du déversoir extérieur (53).

13. Dispositif selon la revendication 10, comprenant des ailettes d'entraînement circonférentiel (46) placées dans l'espace d'écoulement longitudinal (44) du déversoir intérieur (42).

14. Dispositif selon la revendication 10, comprenant des ailettes d'entraînement circonférentiel (50) placées dans l'espace aval d'évacuation (45) du déversoir intérieur (42).

15. Dispositif selon la revendication 10, comprenant des ailettes d'entraînement circonférentiel (58) placées dans l'espace aval d'évacuation 61) du déversoir extérieur (53).

16. Dispositif selon l'une quelconque des revendications précédentes, comprenant un support (11) dudit tambour (16), présentant une partie munie de conduits de sortie (52), au moins l'un de ces conduits de sortie communiquant avec une sortie aval de liquide (59) dudit tambour.

17. Dispositif selon la revendication 16, comprenant un joint tournant de fluide (67) formé entre le tambour et le support, du côté de l'étage d'extraction, ce joint tournant comprenant deux parois radiales fixes (69, 70) solidaires du support et délimitant un espace ouvert radialement vers l'intérieur et une paroi radiale tournante (68) solidaire du tambour engagée à distance entre lesdites parois radiales fixes, cet espace ouvert étant relié à la chambre de l'étage de migration et de coalescence par un canal (54a), la paroi radiale tournante étant munie de part et d'autre d'ailettes d'entraînement circonférentiel (68a, 68b).

18. Dispositif selon l'une quelconque des revendications précédentes, dans lequel le tambour (16) est équipé d'une paroi intérieure radiale (34) séparant la chambre de l'étage de migration et de coalescence (40) et l'étage d'extraction (41), cette paroi intérieure radiale présentant au moins un passage longitudinal de communication (36, 37) entre ces étages.

19. Dispositif selon la revendication 10, comprenant un conduit (43a) reliant l'espace interne du déversoir intérieur et l'espace interne du déversoir extérieur.

20. Dispositif selon la revendication 10, comprenant un conduit (72) pour relier l'espace interne du déversoir intérieur à l'extérieur et un conduit (74, 75) pour relier l'espace interne du déversoir extérieur à l'extérieur.

21. Dispositif selon l'une quelconque des revendications précédentes, dans lequel des sources de pression/dépression de gaz (73, 77) sont reliées aux espaces d'écoulement des déversoirs (42, 53) de l'étage d'extraction (41), de façon que ces pressions agissent respectivement sur les surfaces libres des liquides.

22. Dispositif selon l'une quelconque des revendications précédentes, dans lequel l'étage d'extraction (41) est situé au-dessus de l'étage de migration et de coalescence (40).

23. Dispositif selon l'une quelconque des revendications précédentes, comprenant une chambre d'admission reliée axialement à la partie centrale de la chambre de l'étage de mise en rotation solide, cette chambre d'admission étant alimentée tangentiellement dans le sens de la rotation dudit tambour afin d'engendrer une rotation de l'émulsion jusqu'à l'étage de mise en rotation solide (33).

## Patentansprüche

1. Vorrichtung zum Trennen von nicht mischbaren Fluiden von unterschiedlichen Dichten einer Emulsion, welche mindestens eine Flüssigkeit enthält, aufweisend eine longitudinal drehbare Trommel, welche eine longitudinale Drehachse aufweist und bei welcher stromabwärtig die Trommel innen, longitudinal stromaufwärtig und zwischen mindestens einem stromaufwärtigen Einlass (29) und stromabwärtigen Auslässen (49, 72) aufweist:
eine Stufe zum Versetzen in stabile Drehung (33), welche mindestens eine Kammer aufweist, in welcher mindestens eine innere, longitudinale Trennwand (31) zum Antrieb in stabile Drehung in Umfangsrichtung angeordnet ist, welche mindestens einen Strömungsraum (32) abgrenzt, welcher mit dem Einlass kommuniziert;
eine Stufe zur Wanderung und Verschmelzung (40), welche mindestens eine Kammer (35) aufweist, in welcher mindestens eine innere, longitudinale Abschottung zum Abtrieb in stabile Drehung in Umfangsrichtung angeordnet ist, welche eine Vielzahl von longitudinalen Strömungskanälen (39) abgrenzt, welche jeweils ein mit dem Strömungsraum der Stufe zum Versetzen in stabile Drehung kommunizierendes, stromaufwärtiges Ende und ein mit den Auslässen verbundenes stromabwärtiges Ende aufweist, wobei die Abschottung mindestens eine longitudinale Trennwand (38) aufweist, welche mindestens einen der longitudinalen Kanäle abgrenzt und sich bis zu dem stromabwärtigen Ende erstreckt;
und eine Extraktionsstufe (41), welche mindestens einen Flüssigkeitsüberlauf (42) aufweist, welcher eine Überlaufschwelle (45) aufweist, welche auf der Seite der Drehachse umgebogen ist und sich entlang eines longitudinalen Strömungsraums (44) erstreckt, welcher stromaufwärts mit den longitudinalen Kanälen (39) der Stufe zur Wanderung und Verschmelzung durch mindestens einen longitudinalen Durchgang (36) kommuniziert und stromabwärts einen stromabwärtigen Raum zum Abführen von Flüssigkeit (48), welcher mit dem longitudinalen Strömungsraum kommuniziert und mit einem der stromabwärtigen Auslässen verbunden ist;
bei welcher der stromaufwärtige Einlass (29) in einen Teil des Strömungsraums der Stufe zum Versetzen in stabile Drehung mündet, welcher sich nahe an der Drehachse befindet;
und bei welcher die Trommel (16) mit einer radialen inneren Wand (27) ausgerüstet ist, welche die Kammer der Stufe zum Versetzen in stabile Drehung (33) und die Kammer der Stufe zur Wanderung und Verschmelzung (40) trennt, wobei die radiale innere Wand mit durchgehenden Durchgängen (30) versehen ist.

2. Vorrichtung nach Anspruch 1, aufweisend eine axiale Leitung (71) oder ein axiales Rohr (24), welches fest mit der Trommel verbunden ist, für das Zuführen der Emulsion in den zentralen Teil der Kammer (28) der Stufe zum Versetzen in stabile Drehung (33).

3. Vorrichtung nach einem der Ansprüche 1 und 2, bei welcher die Abschottung der Stufe zur Wanderung und Verschmelzung (40) von stromaufwärts nach stromabwärts eine Vielzahl von longitudinalen Kanälen (39) definiert, welche über den Umfang verteilt sind.

4. Vorrichtung nach einem der Ansprüche 1 und 2, bei welcher die Abschottung der Stufe zur Wanderung und Verschmelzung (40) von stromaufwärts nach stromabwärts eine Vielzahl von longitudinalen Zwischenkanälen (106) definiert, welche über den Umfang und radial verteilt sind, welche von einer Vielzahl von stromabwärtigen longitudinalen Kanälen gefolgt wird, welche über den Umfang verteilt sind, von welchen jeder Kanal mit mehreren Kanälen der ersten Vielzahl von Kanälen kommuniziert.

5. Vorrichtung nach einem der Ansprüche 1 und 2, bei welcher die Abschottung der Stufe zur Wanderung und Verschmelzung (40) von stromaufwärts nach stromabwärts eine Vielzahl von stromaufwärtigen longitudinalen Kanälen definiert, welche über den Umfang verteilt sind, welche von einer Vielzahl von longitudinalen Zwischenkanälen (106) gefolgt wird, welche über den Umfang und radial verteilt sind, von welchen mehrere Kanäle mit jedem Kanal der Vielzahl von stromaufwärtigen Kanälen kommunizieren, welche von einer Vielzahl von stromabwärtigen longitudinalen Kanälen gefolgt wird, welche über den Umfang verteilt sind, von welchen jeder Kanal mit mehreren Kanälen der ersten Vielzahl von Kanälen kommuniziert.

6. Vorrichtung nach einem der vorhergehenden Ansprüche, bei welcher die Extraktionsstufe (41) einen Überlauf (42) aufweist, dessen Überlaufschwelle ringförmig ist, und wobei ein stromabwärtiger ringförmiger Abführraum (48) mit einem stromabwärtigen peripherischem Auslass (49) kommuniziert.

7. Vorrichtung nach einem der vorhergehenden Ansprüche, bei welcher die Extraktionsstufe einen Überlauf (42) aufweist, dessen Überlaufschwelle nahe an der Drehachse liegt, wobei der stromabwärtige Abführraum dieses Überlaufs mit einem stromabwärtigen Flüssigkeitsauslass (49) und mit einem stromabwärtigen Gasauslass (72) verbunden ist.

8. Vorrichtung nach einem der vorhergehenden Ansprüche, aufweisend Trennwände zum Antrieb in Umfangsrichtung (50), welche in dem stromabwärtigen Abführraum platziert sind.

9. Vorrichtung nach einem der vorhergehenden Ansprüche, aufweisend Flügel zum Antrieb in Umfangsrichtung (46), welche in dem longitudinalen Abführraum platziert sind.

10. Vorrichtung nach einem der vorhergehenden Ansprüchen, bei welcher die Extraktionsstufe (41) einen innere Flüssigkeitsüberlauf (42) für leichtere Flüssigkeit, dessen longitudinaler Strömungsraum (44) mit der Stufe zur Wanderung und Verschmelzung (40) durch einen inneren longitudinalen Durchgang (36) kommuniziert, und einen äußeren Überlauf (53) für eine schwerere Flüssigkeit aufweist, deren longitudinaler Strömungsraum (59) mit der Stufe zur Wanderung und Verschmelzung (40) durch einen äußeren longitudinalen Durchgang (37) kommuniziert, welcher von der Drehachse weiter entfernt ist als der inneren longitudinale Durchgang,
wobei die Überlaufschwelle (60) des äußeren Überlaufs von der Drehachse weiter entfernt ist als die Überlaufschwelle (45) des inneren Überlaufs,
wobei sich die Überlaufschwelle (60) des äußeren Überlaufs in radialer Richtung zwischen dem äußeren longitudinalen Durchgang (37) und der Überlaufschwelle (60) des inneren Überlaufs befindet, und
wobei der innere Überlauf und der äußere Überlauf mit den stromabwärtigen Auslässen (49, 63) mit Hilfe der verschiedenen stromabwärtigen Abführräume (48, 62) verbunden sind.

11. Vorrichtung nach Anspruch 10, aufweisend Flügel zum Antrieb in Umfangsrichtung (58), welche in dem zwischenliegenden Strömungsraum (57) platziert sind, welcher den äußeren Durchgang (37) und den äußeren Überlauf (53) verbindet.

12. Vorrichtung nach Anspruch 11, bei welcher die Flügel zum Antrieb in Umfangsrichtung (58) einen inneren Rand (58a) aufweisen, welcher sich außerhalb und entfernt von der Überlaufschwelle (60) des äußeren Überlaufs (53) befindet.

13. Vorrichtung nach Anspruch 10, aufweisend Flügel zum Antrieb in Umfangsrichtung (46), welche in dem longitudinalen Strömungsraum (44) des inneren Überlaufs (42) platziert sind.

14. Vorrichtung nach Anspruch 10, aufweisend Flügel zum Antrieb in Umfangsrichtung (50), welche in dem stromabwärtigen Abführraum (45) des inneren Überlaufs (42) platziert sind.

15. Vorrichtung nach Anspruch 10, aufweisend Flügel zum Antrieb in Umfangsrichtung (58), welche in dem stromabwärtigen Abführraum (61) des äußeren Überlaufs (53) platziert sind.

16. Vorrichtung nach einem der vorhergehenden Ansprüche, aufweisend einen Träger (11) der Trommel (16), welcher einen Teil aufweist, welcher mit Auslassleitungen (52) versehen ist, wobei zumindest eine dieser Auslassleitungen mit einem stromabwärtigen Flüssigkeitsauslass (59) der Trommel kommuniziert.

17. Vorrichtung nach Anspruch 16, aufweisend eine drehende Fluidverbindung (67), welche zwischen der Trommel und dem Träger auf der Seite der Extraktionsstufe ausgebildet ist, wobei diese drehende Verbindung zwei feste radiale Wände (69, 70), welche mit dem Träger fest verbunden sind und einen Raum definieren, welcher radial nach innen offen ist, und eine drehende radiale Wand (68) aufweist, welche fest mit der Trommel verbunden ist und in Abstand zwischen den festen radialen Wänden in Eingriff ist, wobei dieser offene Raum durch einen Kanal (54a) mit der Stufe zur Wanderung und Verschmelzung verbunden ist, wobei die drehende radiale Wand beiderseits mit Flügeln zum Antrieb in Umfangsrichtung (68a, 68b) versehen ist.

18. Vorrichtung nach einem der vorhergehenden Ansprüche, bei welcher die Trommel (16) mit einer radialen inneren Wand (34) ausgerüstet ist, welche die Kammer der Stufe zur Wanderung und Verschmelzung (40) und die Extraktionsstufe (41) trennt, wobei diese radiale innere Wand mindestens einen longitudinalen Durchgang (36, 37) zur Kommunikation zwischen diesen Stufen aufweist.

19. Vorrichtung nach Anspruch 10, aufweisend eine Leitung (43a), welche den inneren Raum des inneren Überlaufs und den inneren Raum des äußeren Überlaufs verbindet.

20. Vorrichtung nach Anspruch 10, aufweisend eine Leitung (72), um den inneren Raum des inneren Überlaufs mit dem Außenbereich zu verbinden, und eine Leitung (74, 75), um den inneren Raum des äußeren Überlaufs mit dem Außenbereich zu verbinden.

21. Vorrichtung nach einem der vorhergehenden Ansprüche, bei welcher Gas-Druck/Unterdruck-Quellen (73, 77) mit den Strömungsräumen der Überläufe (42, 53) der Extraktionsstufe (41) verbunden sind, so dass diese Drücke jeweils auf die freien Oberflächen der Flüssigkeiten einwirken.

22. Vorrichtung nach einem der vorhergehenden Ansprüche, bei welcher sich die Extraktionsstufe (41) über der Stufe zur Wanderung und Verschmelzung (40) befindet.

23. Vorrichtung nach einem der vorhergehenden Ansprüche, aufweisend eine Einlasskammer, welche axial mit dem zentralen Teil der Kammer der Stufe zum Versetzen in stabile Drehung verbunden ist, wobei diese Einlasskammer tangential in der Drehrichtung der Trommel versorgt wird, um eine Drehung der Emulsion bis zur der Stufe zum Versetzen in stabile Drehung (33) zu erzeugen.

## Claims

1. A device for separating immiscible fluids of different densities from an emulsion containing at least one liquid, comprising a longitudinal rotary drum having a longitudinal axis of rotation, and in which the drum comprises, internally, longitudinally from upstream to downstream and between at least one upstream inlet (29) and a number of downstream outlets (49, 72):
a solid body rotation stage (33) having at least one chamber, inside which is arranged at least one longitudinal inner partition (31) for causing circumferential solid body rotation delimiting at least one flow space (32) communicating with said inlet ;
a migration and coalescence stage (40) having at least one chamber (35), inside which is arranged at least one longitudinal interior partition for causing circumferential solid body rotation, delimiting a plurality of longitudinal flow channels (39) exhibiting respectively one upstream extremity communicating with said flow space of said solid body rotation stage and one downstream extremity connected to said outlets, said partition comprising at least one longitudinal partition (38) delimiting at least one of said longitudinal channels and extending as far as said downstream extremity ;
and an extraction stage (41) comprising at least one liquid overflow (42) comprising an overflow edge (45) turned facing towards said axis of rotation and extending along a longitudinal flow space (44) communicating, upstream, with said longitudinal channels (39) of the migration and coalescence stage via at least one longitudinal passageway (36), and comprising, downstream, a downstream liquid discharge space (48) communicating with the longitudinal flow space and connected to one of said downstream outlets ;
in which the said upstream inlet (29) discharges into a section of the flow space of the solid body rotation stage situated close to the axis of rotation ;
and in which the drum (16) is equipped with a radial interior wall (27) separating the chamber of the solid body rotation stage (33) and the chamber of the migration and coalescence stage (40), said radial interior wall being provided with through passageways (30).

2. The device as claimed in the claim 1, comprising an axial pipe (71) or an axial tube (24) that is integral with the drum for the purpose of conveying the emulsion into the central section of the chamber (28) of the solid body rotation stage (33) .

3. The device as claimed one of the claims 1 and 2, in which the partitioning of the migration and coalition stage (40) defines, from upstream to downstream, a plurality of longitudinal channels (39) that are distributed circumferentially.

4. The device as claimed in one of the claims 1 and 2, in which the partitioning of the migration and coalition stage (40) defines, from upstream to downstream, an intermediate plurality of longitudinal channels (106) that are distributed circumferentially and radially, followed by a downstream plurality of longitudinal channels that are distributed circumferentially, of which each channel communicates with a number of the channels in the first plurality of channels.

5. The device as claimed in one of the claims 1 and 2, in which the partitioning of the migration and coalition stage (40) defines, from upstream to downstream, an upstream plurality of longitudinal channels that are distributed circumferentially, followed by an intermediate plurality of longitudinal channels (106) that are distributed circumferentially and radially, of which a number of channels communicate with each channel in the upstream plurality of channels, followed by a downstream plurality of longitudinal channels that are distributed circumferentially, of which each channel communicates with a number of the channels in the first plurality of channels.

6. The device as claimed in any of the preceding claims, in which the extraction stage (41) comprises an overflow (42), of which the overflow edge is annular, and an annular downstream liquid discharge space (48) communicating with a downstream peripheral outlet (49).

7. The device as claimed in any of the preceding claims, in which the extraction stage comprises an overflow (42), of which the overflow edge is close to the axis of rotation, the downstream liquid discharge space of this overflow being connected to a downstream liquid outlet (49) and to a downstream gas outlet (72).

8. The device as claimed in any of the preceding claims, comprising partitions (50) for causing circumferential rotation positioned inside the downstream liquid flow space.

9. The device as claimed in any of the preceding claims, comprising circumferentially driving vanes (46) positioned inside the longitudinal flow space.

10. The device as claimed in any of the preceding claims, in which the extraction stage (41) comprises an interior overflow (42) for lighter liquid, of which the longitudinal flow space (44) communicates with the migration and coalescence stage (40) via a longitudinal interior passageway (36), and an exterior overflow (53) for a heavier liquid, of which the longitudinal flow space (59) communicates with the migration and coalescence stage (40) via a longitudinal exterior passageway (37) located further from said axis of rotation than the longitudinal interior passageway,
the overflow edge (60) of the exterior overflow being located further away from said axis of rotation than the overflow edge (45) of the interior overflow,
the overflow edge (60) of the exterior overflow being situated, in the radial sense, between the exterior longitudinal passageway (37) and the overflow edge (60) of the interior overflow, and
the interior overflow and the exterior overflow being connected to different downstream outlets (49, 63) by means of downstream discharge spaces (48, 62).

11. The device as claimed in claim 10, comprising circumferentially driving vanes (58) positioned inside the intermediate flow space (57) connecting the exterior passageway (37) and the exterior overflow (53).

12. The device as claimed in claim 11, in which said circumferentially driving vanes (58) exhibit an interior edge (58a) situated outside and at a distance from the overflow edge (60) of the exterior overflow (53).

13. The device as claimed in claim 10, comprising circumferentially driving vanes (46) positioned inside the longitudinal flow space (44) of the interior overflow (42).

14. The device as claimed in claim 10, comprising circumferentially driving vanes (50) positioned inside the downstream discharge space (45) of the interior overflow (42).

15. The device as claimed in claim 10, comprising circumferentially driving vanes (58) positioned inside the downstream discharge space (61) of the exterior overflow (53).

16. The device as claimed in any of the preceding claims, comprising a support (11) for said drum (16), exhibiting a section provided with outlet pipes (52), at least one of said outlet pipes communicating with a downstream outlet (59) for liquid from said drum.

17. The device as claimed in claim 16, comprising a rotating fluid seal (67) formed between the drum and the support, adjoining the extraction stage, said rotating seal comprising two fixed radial walls (69, 70) that are integral with the support and delimit a space that is open in the radial sense towards the interior and a rotating radial wall (68) that is integral with the drum engaged at a distance between said fixed radial walls, said open space being connected to the chamber of the migration and coalition stage via a channel (54a), the rotating radial wall being provided on both sides with circumferentially driving vanes (68a, 68b).

18. The device as claimed in any of the preceding claims, in which the drum (16) is equipped with a radial interior wall (34) separating the chamber of the migration and coalescence stage (40) and the extraction stage (41), said radial interior wall exhibiting at least one longitudinal communication passageway (36, 37) between these stages.

19. The device as claimed in claim 10, comprising a pipe (43a) connecting the internal space of the interior overflow and the internal space of the exterior overflow.

20. The device as claimed in claim 10, comprising a pipe (72) for connecting the internal space of the interior overflow to the exterior and a pipe (74, 75) for connecting the internal space of the exterior overflow to the exterior.

21. The device as claimed in any of the preceding claims, in which the gas pressurization/depressurization sources (73, 77) are connected to the flow spaces of the overflows (42, 53) of the extraction stage (41), in such a way that these pressures act respectively on the free surfaces of the liquids.

22. The device as claimed in any of the preceding claims, in which the extraction stage (41) is situated above the migration and coalescence stage (40).

23. The device as claimed in any of the preceding claims, comprising an inlet chamber connected axially to the central section of the chamber of the solid body rotation stage, said inlet chamber being supplied tangentially in the direction of rotation of said drum in order to bring about a rotation of the emulsion as far as the solid body rotation stage (33).
